# EUROPÄISCHE PATENTSCHRIFT

(11) **EP 2 668 118 B1**
(45) Veröffentlichungstag und Bekanntmachung des Hinweises auf die Patenterteilung: **15.06.2016**
(21) Anmeldenummer: 12703992.3
(22) Anmeldetag: 27.01.2012
(51) Int. Cl.: B65G 1/137

(54) **VORRICHTUNG UND VERFAHREN ZUR ERFASSUNG DES WARENBESTANDES EINES REGALLAGERS, UND VERWENDUNG EINES COMPUTERPROGRAMMPRODUKTS IN EINEM SOLCHEN REGALLAGER**
DEVICE AND METHOD FOR CARRYING OUT THE INVENTORY OF A WAREHOUSE, AND USE OF A COMPUTER PROGRAMM PRODUCT IN SUCH WAREHOUSE
DISPOSITIF ET PROCÉDÉ POUR EFFECTUER L'INVENTAIRE D'UN ENTREPOT, ET UTILISATION D'UN PRODUIT-PROGRAMME-ORDINATEUR DANS UN TEL ENTREPOT

(30) Priorität: 28.01.2011 DE 102011009739
(43) Veröffentlichungstag der Anmeldung: 04.12.2013
(73) Patentinhaber: METRO SYSTEMS GMBH, ., 40235 Düsseldorf (DE)
(72) Erfinder: BAUER, Christoph, 40213 Düsseldorf (DE)
(74) Vertreter: Kietzmann, Lutz
(86) Internationale Anmeldenummer: PCT/EP2012/051306
(87) Internationale Veröffentlichungsnummer: WO 2012/101248

(56) Entgegenhaltungen:
- WO-A1-03/025834
- DE-A1-102004 035 819
- US-A1- 2005 024 004

## Beschreibung

Die Erfindung betrifft eine Vorrichtung sowie ein Verfahren zum Erfassen des Warenbestandes einer Verkaufs- und/oder Lagereinrichtung mittels einzelnen Wareneinheiten und/oder Ladungsträgern zugeordneten RFID-Transpondern, wobei sich eine RFID-Leseeinheit zum Auslesen der in jedem RFID-Transponder gespeicherten Information durch eine Robotereinrichtung entlang einer definierten Erfassungsfläche gegenüberliegend zu jedem RFID-Transponder positionieren lässt. Weiterhin betrifft die Erfindung auch eine die Vorrichtung umfassendes Lagerverwaltungssystem und schließlich auch ein die erfindungsgemäßen Verfahrensschritte umsetzendes Computerprogrammprodukt.

Das Einsatzgebiet der Erfindung erstreckt sich vornehmlich auf lagerlogistische Anwendungen. Das primäre Anwendungsszenario liegt bei der Erfassung und Aktualisierung des Bestandes von Lagersystemen aller Art, insbesondere Lagersystemen mit definierten Lagerplätzen, wie Fächern, Stellplätzen oder Tablaren, wie auch auf Lagereinrichtungen ohne ausgewiesene Lagerplätze. Zu Letzteren können vor allem Lagereinrichtungen gezählt werden, bei denen unterschiedlich große Produkte, Gebinde und Ladungsträger eingelagert werden. Aufgrund der direkten Erfassung des Ist-Zustandes ist hierbei die Erzeugung von sogenannten virtuellen Lagerplätzen möglich, also die Erfassung und Verwaltung von ad-hoc gebildeten Lagerplätzen an beliebigen Orten und von beliebiger Größe, ohne dass diese Daten während der Einlagerung erfasst werden müssen. Weiterhin sind auch Anwendungen im Bereich des Erfassens von Warenbeständen in anderen lagerorientierten Umgebungen, etwa permanente Inventur von Bibliotheken und dergleichen denkbar. Die Erfindung lässt sich ferner auch für die Erfassung eines Warenbestands in innen- oder außenliegenden Verkaufsflächen oder für die Inventur in Logistik- und Kommissionierzentren nutzen.

Gemäß des allgemein bekannten Standes der Technik kommen zum Erfassen des Warenbestandes technische Identifikationsmittel, wie Barcode-Scanner, RFID (Radio Frequency Identification) -Scanner zum Einsatz, welche oftmals in tragbaren Handgeräten integriert sind. Eine fehlerhafte manuelle Bestandserfassung ist hierbei nicht ausgeschlossen. In vollständig automatisierten Lagern, in denen kein Warenausgang durch Mitarbeiter oder Betriebsfremde durchgeführt wird, lässt sich eine vollständige systematische Erfassung aller Bestandsänderungen und Übertragung dieser Daten in ein zentrales Lagerverwaltungssystem in weit zuverlässigerer Weise durchführen.

Aus der DE 10 2004 035 819 A1 geht ein gattungsgemäßes Verfahren sowie eine gattungsgemäße Vorrichtung zur automatischen Warenbestandserfassung hervor. Hierbei ist ein Lagerbediengerät zum Transport einzelner Wareneinheiten zu einem von einer Vielzahl ansteuerbarer Lagerplätze vorgesehen, deren Adressen in einem Lagerverwaltungsrechner abgelegt sind. Eine die Wareneinheiten erkennende Identifikationsvorrichtung, welche zum berührungslosen Auslesen eines Identifikationscodes an den Lagerplätzen vorbeibewegbar ist, ist ebenfalls mit im Lagerbediengerät integriert. Zur Erfassung des aktuellen Warenbestands eines Lagers zu Inventurzwecken, zu Korrekturzwecken nach Systemfehlern oder bei der Inbetriebnahme und der Befüllung des Lagers wird vorgeschlagen, dass jede einzelne in dem Lager abgelegte Wareneinheit mit einem Transponder versehen wird, der objektbezogene Daten auf dem Artikel selbst vorhält und diese berührungslos über Funk an ein Lesegerät überträgt, welches an dem Bediengerät angeordnet ist. Das Lesegerät steht mit dem Lagerverwaltungsrechner zum Abgleich der vom Lesegerät erfassten und in dem Lagerverwaltungsrechner gespeicherten Daten in Verbindung.

Da das Lagerbediengerät zur Erfassung des Lagerbestands mäanderförmig von Lagerzeile zu Lagerzeile fährt, ist die Bestandserfassung insbesondere deswegen recht aufwendig, weil hierfür die Antriebsenergie des Lagerbediengeräts genutzt wird. Außerdem kann während der Bestandserfassung keine Ein- oder Auslagerung durchgeführt werden.

Aus der EP 2 017 200 A2 geht ein Regallager hervor, dessen Bestandserfassung über Transpondertechnik erfolgt, indem eine Leseeinrichtung über sich kreuzende Seilzüge auf einer vorbestimmten Bewegungsbahn entlang der Regalbögen bewegt wird. Es wird also ebenfalls ein mänderförmiges Abfahren der einzelnen Lagerzeilen durchgeführt.

Es ist daher die Aufgabe der vorliegenden Erfindung, eine Vorrichtung sowie ein Verfahren zum Erfassen des Lagerbestandes einer Verkaufs- und/oder Lagereinrichtung mittels einzelnen Wareneinheiten zugeordneten Transpondern zu schaffen, welche/welches innerhalb kürzester Zeit eine vollautomatisierte Bestandserfassung ermöglicht, ohne den Warenfluss in das oder aus dem Lager zu behindern.

Die Aufgabe wird ausgehend von einer Vorrichtung gemäß dem Oberbegriff von Anspruch 1 in Verbindung mit dessen kennzeichnenden Merkmalen gelöst. Verfahrenstechnisch wird die Aufgabe durch Anspruch 6 gelöst. Hinsichtlich eines hiermit im Zusammenhang stehenden Lagerverwaltungssystems wird auf Anspruch 11 verwiesen, wogegen auf eine hiermit im Zusammenhang stehende Verwendung eines Computerprogrammprodukts, auf Anspruch 14 verwiesen wird.

Die Erfindung schließt die vorrichtungstechnische Lehre ein, dass die Robotereinrichtung als eine Art Seilroboter ausgebildet mehrere entlang einer zweidimensionalen Erfassungsfläche angeordnete Zugseile umfasst, die je zu einem Ende an der RFID-Leseeinheit und zum anderen Ende an einer am Rand der Erfassungsfläche angeordneten Seilwinde angebracht sind, welche zur Positionierung der RFID-Leseeinheit nach Maßgabe einer gemeinsamen elektronischen Steuereinheit ansteuerbar sind.

Der Vorteil der erfindungsgemäßen Lösung liegt insbesondere darin, dass die Datenerfassung einer Ein- und Auslagerung von Wareneinheiten in die Verkaufs- oder Lagereinrichtung ohne eine Beeinträchtigung des regulären Lagerbetriebs erfolgen kann, beispielsweise auch eine Verkaufsfläche während der Datenerfassung für den Kunden zugänglich bleiben kann. In einer reinen Lagereinrichtung kann die meist automatisierte Fördertechnik, wie Lagerbediengeräte, Gabelstapler oder auch eine manuelle Kommissionierung, ohne Einschränkung weiterbetrieben werden. Die erfindungsgemäße Lösung ermöglicht eine Datenerhebung in sehr kurzen Intervallen von weniger als einer Stunde, selbst bei sehr groß bauenden üblichen Lagereinrichtungen und erlaubt somit eine kontinuierliche Überwachung des Warenbestands, ohne dass Daten über die Ein- und Auslagerung benötigt werden. Somit ist die erfindungsgemäße Lösung vor allem bei Anwendungen nützlich, bei denen Ein-, Aus-und Umlagerungsvorgänge nicht systematisch erfasst werden.

Neben der Durchführung permanenter Inventuren von Ladungsträgern, Gebinden und einzelnen Wareneinheiten und deren Abspeicherung hinsichtlich Art, Ort, Menge und Zeit der inventarisierten Einheiten lässt sich die erfindungsgemäße Lösung auch für andere Betriebsarten nutzen. So kann der aktuelle Füllstand von einzelnen Wareneinheiten in der für einen Kunden zugänglichen Griffzone für Einzelprodukte in einem Warenregal festgestellt werden, um eine Nachfüllaktion dann auszulösen, wenn eine festgelegte Mindermenge erreicht ist. Weiterhin können leere Lagerplätze identifiziert werden oder hinsichtlich erforderlicher Umlagerungsprozesse können Alarmsignale generiert werden, wenn ein Nachverräumen von Wareneinheiten erforderlich ist. Im Rahmen einer Fehlererkennung können des Weiteren Wareneinheiten identifiziert werden, welche an den falschen Regalplätzen oder in die falsche Griffzone platziert wurden. Durch die erfindungsgemäß schnelle Erfassung von Ist-Standorten von Wareneinheiten kann sogar ein chaotisches Lager betrieben werden, bei dem ohne Planung eingelagert werden kann, da der Warenbestand sich permanent erfassen lässt, sofern das Erfassen schneller erfolgt, als typische Verräumvorgänge.

Die durch die speziell zweidimensional arbeitende Robotereinrichtung ermöglichte Erfassungsfläche kann im Rahmen der vorliegenden Erfindung sowohl vertikal als auch schräg ausgerichtet sein. Gemäß einer ersten bevorzugten Ausführungsform der erfindungsgemäßen Lösung ist eine vertikal ausgerichtete Erfassungsfläche zu einer Seite eines als Verkaufs- und/oder Lagereinrichtung ausgebildeten Regals angeordnet. Hierbei wird die RFID-Leseeinheit durch die Robotereinrichtung mit zwei Freiheitsgeraden also in einer vertikalen Ebene an einem Regal entlang geführt, vorzugsweise der Rückseite des Regals, welcher der für die Ein- und Auslagerung vorgesehenen Frontseite des Regals gegenüberliegt. Hierdurch kann eine Behinderung der Fördertechnik durch die Erfassungstechnik vermieden werden. Ganz vorzugsweise ist die Erfassungsfläche in einer spaltförmigen Gasse zwischen zwei mit den Rückseiten aneinandergestellten Regalen angeordnet, um platzsparend einen abgekapselten Betrieb der erfindungsgemäßen Vorrichtung zu ermöglichen.

Um die RFID-Leseeinheit relativ zum Regal zu bewegen, wird vorgeschlagen, dass zumindest in jedem Eckbereich des gewöhnlich rechteckigen Regals eine Seilwinde angebracht ist, so dass die RFID-Leseeinheit über die je zugeordneten Zugseile über die entsprechend rechteckige Erfassungsfläche verfahrbar ist. Somit sind insgesamt vier gegenüber der RFID-Leseeinheit sternförmig angeordnete Zugseile ausreichend, um eine relativ große rechteckige Erfassungsfläche abzudecken. Die RFID-Leseeinheit kann dabei kontinuierlich oder in einem diskreten Zeitraster die Daten an der durch die Robotereinrichtung definierten vorgegebenen Position erfassen. Die Sensordaten werden vorzugsweise mit einem Zeitstempel versehen und als Datensatz an eine Datenverarbeitungseinheit eines übergeordneten Lagerverwaltungsrechners übermittelt. Durch die Auswertung werden die Informationsdaten mit den Orts- und Zeitdaten in Korrelation gebracht, um beispielsweise die Position von erkannten Wareneinheiten zu erkennen, die Menge von Einzelprodukten innerhalb von Gebinden an Wareneinheiten zu ermitteln oder die Menge von Produkten und Gebinden auf einem Ladungsträger zu ermitteln. Ferner kann der Belegungsstatus von Stellplätzen der Lagereinrichtung durch ein oder mehrere Ladungsträger erfasst werden. Durch die Auswertung von Zeitserien von Lager- und RFID-Informationen lässt sich darüberhinaus die Genauigkeit der Lokalisierung von Produkten, Gebinden und Ladungsträger innerhalb der Lagereinrichtung verbessern.

Gemäß einer weiteren die Erfindung verbessernden Maßnahme wird vorgeschlagen, dass die RFID-Leseeinheit als ein Multisensormodul ausgebildet mit mindestens einer zusätzlichen Bildkamera zur Ermittlung der Lagerplatzbelegung und/oder mit mindestens einem Abstandssensor zur korrekten Positionierung relativ zum RFID-Transponder der Wareneinheit und/oder mit mindestens einem Tiefenbildsensor zur dreidimensionalen Objekterkennung ausgestattet ist.

Die Bildkamera zur Erfassung eines farbigen oder monochromen Bildes der Wareneinheit oder des Lagerplatzes kann im Rahmen einer anschließenden Bildverarbeitung zur Erkennung der Verpackungstypen, der Warenart oder dessen Lage und/oder zur Detektion hierauf aufgebrachter Barcodes verwendet werden. Neben einer solchen zweidimensionalen Bilderfassung kann mittels des optionalen Tiefenbildsensors eine höhere Informationsdichte erzeugt werden. Der Tiefenbildsensor kann dabei auf Basis eines Time-Off-Flight-Sensors ausgebildet sein oder auch ein Laser-Scanner, ein Sensor für Stereovision oder Streifenprojektion sein. Als Abstandssensor kann beispielsweise ein Ultraschallsensor oder dergleichen verwendet werden. Daneben kann das Multisensormodul auch weitere Sensoren, beispielsweis zur Absolutpositionserfassung per GPS bestückt sein.

Das durch die erfindungsgemäße Robotereinrichtung bewegte Multisensormodul wird in Sensorreichweite der Wareneinheiten, Gebinde oder Ladungsträger positioniert. Je nach Ausführungsvariante können einzelne der Sensoren oder das gesamte Sensorpaket sowohl auf der Vorder-, als auch auf der Rückseite einer Trägerplattform des Multisensormoduls angebracht werden. Diese Trägerplattform kann bei Bedarf durch die Robotereinrichtung oder eine zusätzliche integrierte Antriebseinheit auch gewendet werden, um eine Umorientierung der Sensorik auf der Trägerplattform zu ermöglichen.

Weiterhin wird vorgeschlagen, dass das Multisensormodul auch eine elektronische Auswerteeinheit zur signaltechnischen Vorverarbeitung der Sensorsignale umfasst sowie auch eine Datenübertragungseinheit zur Übermittlung der Sensordaten an eine nachgeschaltete Datenverarbeitungseinheit, die vorzugsweise drahtlos per Funk, Infrarot oder Laserlicht ausgeführt ist. Daneben ist es auch denkbar, die Datenübertragungseinheit kabelgebunden per Lichtwellenleiter oder elektrisches Kabel anzubinden. Die Energieversorgung des Multisensormoduls kann entweder - falls vorhanden - über Kabel oder auch lokal durch Batterien oder der lokalen Gewinnung elektrischer Energie aus Solarzellen oder dergleichen durchgeführt werden. Die batteriebetriebene Variante eignet sich insbesondere für drahtlose Datenübertragungseinheiten. Bei der drahtgebundenen Datenübertragung lassen sich die Leitungen vorteilhafterweise mit in die tragenden Zugseile des Seilroboters integrieren oder parallel daneben und synchronisiert mit den Seilwinden gespult werden.

Zur Erfassung des Warenbestandes der Verkaufs- oder Lagereinrichtung wird die RFID-Leseeinheit verfahrensgemäß durch den Seilroboter nach Maßgabe der elektronischen Steuereinheit entlang der Erfassungsfläche zu einzelnen RFID-Transpondern von Wareneinheiten bewegt. Dies kann in nicht festgelegter Reihenfolge erfolgen.

Bei der anschließenden Datenverarbeitung werden insbesondere Verfahren verwendet, welche die Information durch Auswertung von mehreren Sensorsignalen verknüpfen, erweitern und/oder verifizieren. Dies kann beispielsweise dadurch erfolgen, dass ein RFID-Tag gefunden wird, die dazugehörige Wareneinheit im Tiefenbild erkannt wird, wobei ein zusätzliches Abstandssensorbild eine Kontur mit bekannter Charakteristik oder Merkmalen erzeugt, welche durch die Kamera per Bildverarbeitung gefunden wird. Bei einer solchen multisensorischen Warenbestandserfassung können teilweise auch redundante Informationen entstehen, welche durch die Datenverarbeitungseinheit genutzt werden, um beispielsweise Mess- und Erkennungsfehler zu kompensieren, womit die Zuverlässigkeit der Datenerfassung erhöht wird. Kontextabhängig können zusätzlich auch statistisch erwartete Daten aus dem Lagerverwaltungssystem zum Abgleich herangezogen werden. Nach Abschluss der Datenverarbeitung werden die insoweit validierten Daten an das Lagerverwaltungssystem übergeben, um den Ist-Zustand der Verkaufs- oder Lagereinrichtung zu aktualisieren.

Gemäß einer weiteren die Erfindung verbessernden Maßnahme wird vorgeschlagen, dass die RFID-Leseeinheit durch die als Seilroboter ausgebildete Robotereinrichtung insbesondere zwecks Kalibrierung in eine bodennahe Wartungsposition am Rande der zweidimensionalen Erfassungsfläche verfahrbar ist. Eine solche Referenzposition der RFID-Leseeinheit kann genutzt werden, um das Positioniersystem zu referenzieren, ggf. vorhandene lokale Energiespeicher aufzuladen, erfasste Daten in einem ggf. zyklischen Betrieb aus der RFID-Leseeinheit in die elektronische Datenauswerteeinheit zu überspielen oder Wartungs- und Installationsarbeiten in erreichbarer Nähe zum Bedienpersonal durchführen zu können. Die RFID-Leseeinheit sollte dabei in der durch die Referenzposition definierten Ruhestellung mechanisch arretiert werden.

Das die erfindungsgemäße Vorrichtung zum Erfassen des Warenbestandes enthaltende Lagerverwaltungssystem weist an zentraler Stelle den bereits vorstehend erwähnten Lagerverwaltungsrechner zur Analyse des Lagerbestandes auf, dessen Aufbau und Funktion im allgemeinen Stand der Technik bekannt ist. Somit umfasst das erfindungsgemäß modifizierte Lagerverwaltungssystem verschiedene Teilsysteme, zu welchen die Robotereinrichtung zur Positionierung der vorzugsweise als Multisensor ausgebildeten RFID-Leseeinheit zählt. Die Bewegung der RFID-Leseeinheit wird durch die zugeordnete elektronische Steuereinheit geplant und regelungstechnisch ausgeführt. Die von der RFID-Leseeinheit erfassten Daten werden an die Datenverarbeitungseinheit übermittelt, welche die von den einzelnen Sensoren und der Steuerung stammenden Daten auswertet und für eine Verarbeitung im Lagerverwaltungsrechner aufbereitet. Die hiervon erhobenen Ist-Daten über den Warenbestand werden bereitgestellt. Dazu kann das Lagerverwaltungssystem auch einen Erfassungsauftrag an die Datenverarbeitung übermitteln. Über eine Mensch-Maschine-Schnittstelle erfolgen die Anzeige des Betriebszustandes sowie die Bedienung der Datenverarbeitungseinheit.

Gemäß einer das Lagerverwaltungssystem verbessernden Maßnahme wird vorgeschlagen, dass zusätzlich eine Anzeigeeinheit zur Visualisierung jedes Lagerplatzinhaltes vorgesehen ist. Die Anzeigeeinheit liefert Bilder einzelner Lagerorte, um eine manuelle Kontrolle der Lagerbelegung zu ermöglichen.

Die durch das erfindungsgemäße Verfahren durchgeführte Routine zur Positionierung der RFID-Leseeinheit lässt sich durch entsprechende in einer Software hinterlegte Steuerungsbefehle in Form eines Computerprogrammproduktes umsetzen.

Weitere die Erfindung verbessernde Maßnahmen werden nachstehend mit der Beschreibung bevorzugter Ausführungsbeispiele der Erfindung anhand der Figuren näher dargestellt. Es zeigt:
Fig. 1 eine Vorrichtung zur Erfassung des Warenbestandes mit vertikal ausgerichteter Erfassungsfläche im Zusammenwirken mit einem Regal,
Fig. 2 eine schematische Darstellung der als Seilroboter ausgebildeten Robotereinrichtung, und
Fig. 3 eine perspektivische Darstellung einer als Multisensormodul ausgebildeten RFID-Leseeinheit.

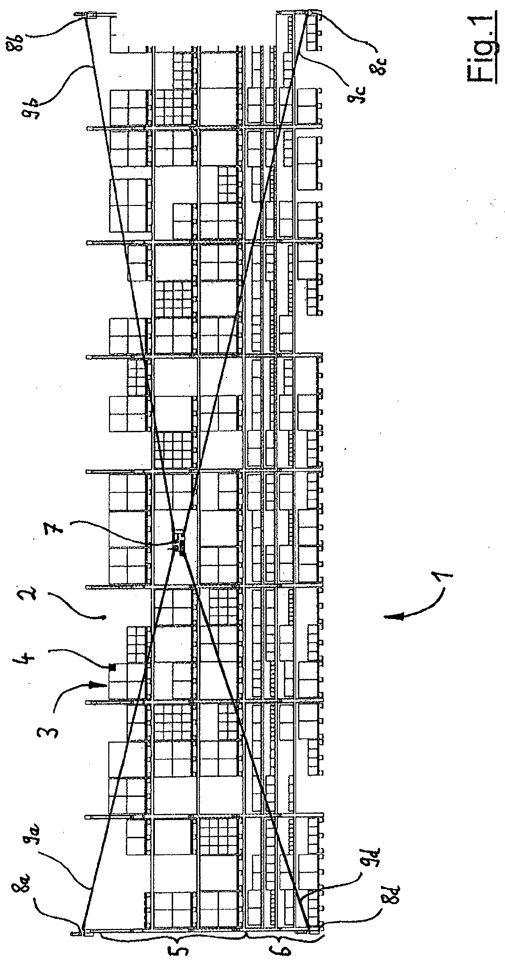

Gemäß Fig. 1 ist eine Lagereinrichtung in Form eines Regals 1 ausgebildet, welches eine Vielzahl einzelner Regalfächer 2 (exemplarisch) umfasst, die in Zeilen- und Spaltenanordnung ausgerichtet sind und verschiedene Fachgrößen besitzen. Das Regal 1 ist in eine obere Lagerzone 5 und eine untere Griffzone 6 untergliedert. Jedes Regalfach 2 ist zur Aufnahme mindestens eines mehrere Wareneinheiten 3 aufweisenden Ladungsträgers in Form einer Palette vorgesehen. An jeder Wareneinheit ist in diesem Ausführungsbeispiel ein RFID-Transponder 4 angeordnet, auf dem in allgemein bekannter Weise Informationen über den Wareninhalt abgespeichert sind, welche mittels Transpondertechnik kontaktlos auslesbar sind. Hierfür wirkt jeder RFID-Transponder 4 einzelner Wareneinheiten 3, aus diesem zusammengestellte Gebinde oder mehrere Gebinde umfassende Ladungsträger mit einer RFID-Leseeinheit 7 zusammen. Zum Auslesen der im RFID-Transponder 4 gespeicherten Informationen muss die RFID-Leseeinheit 7 jeweils gegenüberliegend des jeweiligen RFID-Transponders 4 positioniert werden, wozu das Regal 1 mit einer speziell als Seilroboter ausgebildeten Robotereinrichtung ausgerüstet ist.

Die Robotereinrichtung besteht aus vier, in jedem Eckbereich des Regals 1 angebrachten Seilwinden 8a bis 8d, denen jeweils ein Zugseil 9a bis 9d zugeordnet ist, deren distale Enden am Randbereich der RFID-Leseeinheit 7 befestigt sind. Durch koordinierte Ansteuerung der Seilwinden 8a bis 8d lässt sich die RFID-Leseeinheit 7 über die gesamte der Seitenfläche des Regals 1 entsprechende Erfassungsfläche bewegen, um jeden der auf den Lagerplätzen des Regals 1 angeordneten RFID-Transponder 4 zu erreichen. Die rechteckige Erfassungsfläche ist rückseitig des Regals 1 angeordnet, damit die gegenüberliegende Vorderseite des Regals zur ungestörten Ein- und Auslagerung von Wareneinheiten zur Verfügung steht.

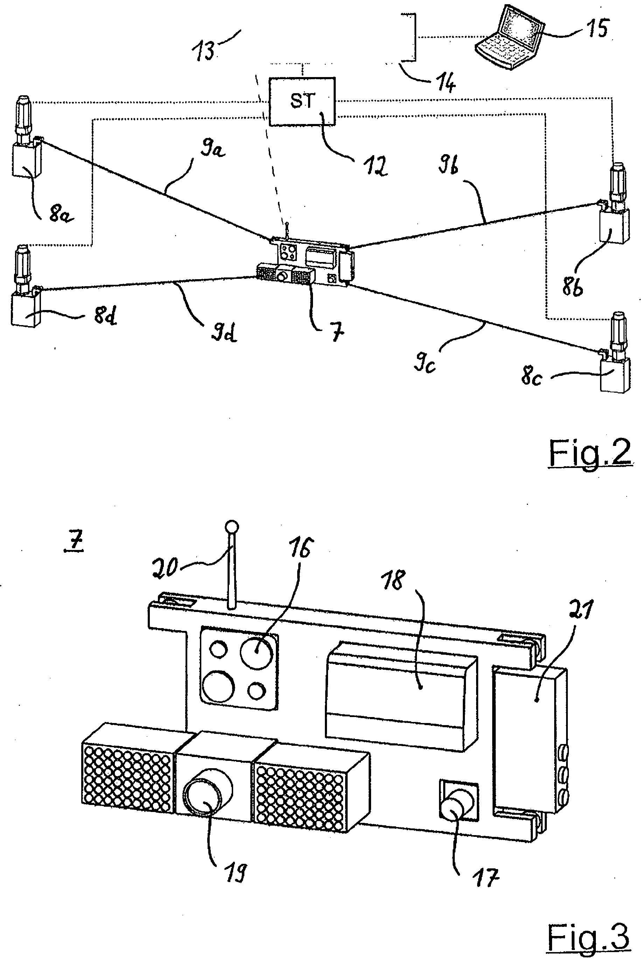

Die Detaildarstellung nach Fig. 2 zeigt - abgeleitet aus Fig. 1 - die sternförmige Anordnung der Zugseile 9a bis 9d an der RFID-Leseeinheit 7 sowie die jedem Zugseil zugeordneten Seilwinden 8a bis 8d. Die zweidimensionale Erfassungsfläche der RFID-Leseeinheit 7 spannt sich insoweit zwischen den die Eckpunkte eines Rechtecks bildenden Seilwinden 8a bis 8d auf. Entlang der so gebildeten rechteckigen Erfassungsfläche wird die RFID-Leseeinheit 7 durch den Seilroboter nach Maßgabe einer elektronischen Steuereinheit 12 bewegt. Die elektronische Steuereinheit 12 dient erstrangig zur koordinierten Ansteuerung der einzelnen Seilwinden 8a bis 8d, damit die RFID-Leseeinheit 7 jeden Punkt der zweidimensionalen Erfassungsfläche erreichen kann. Die elektronische Steuereinheit 12 steht mit einer Datenverarbeitungseinheit 13 in Verbindung, welche die elektronische Steuereinheit die Positionieraufträge zuteilt und von dieser in die Ist-Position der RFID-Leseeinheit 7 empfängt. Weiterhin dient die Datenverarbeitungseinheit 13 der Auswertung der von der RFID-Leseeinheit 7 per Funk empfangenen Sensordaten sowie der Prozessplanung, beispielsweise zur Durchführung einer Inventur. Die Datenverarbeitungseinheit 13 steht wiederum mit einem übergeordneten Lagerverwaltungsrechner 14 in Verbindung, welcher Informationen über den Lagerbestand und dergleichen ermittelt und bereitstellt. Zu diesem Zweck ist dem Lagerverwaltungsrechner 14 eine Anzeigeeinheit 15 in Form eines Bildschirms zur Visualisierung jedes Lagerplatzinhaltes zugeordnet.

Gemäß Fig. 3 ist die RFID-Leseeinheit 7 als ein Multisensormodul ausgebildet und umfasst neben einem RFID-Sensor 16 eine zusätzliche Bildkamera 17 zur Ermittlung der Lagerplatzbelegung, zur Verpackungstyperkennung oder generellen Objekterkennung. Weiterhin umfasst das Multisensormodul einen Abstandssensor 18 zur korrekten Positionierung der gesamten RFID-Leseeinheit 7 gegenüber dem - hier nicht weiter dargestellten - RFID-Transponder 4 der Wareneinheit. Sowie einen Tiefenbildsensor 19, der auf Basis eines Time-Off-Flight-Sensor ein dreidimensionales Abbild des Lagerplatzes oder der hierin vorhandenen Wareneinheit zur dreidimensionalen Objekterkennung liefert. Zur drahtlosen Datenübertragung der von den verschiedenen Sensoren der Multisensormoduls erfassten Daten dient eine mit einer Antenne 20 versehene Funkübertragungseinheit, welche nach dem WLAN -Standard ausgebildet ist. Ferner ist für die Versorgung des Multisensormoduls mit der erforderlichen elektrischen Betriebsenergie ein Akkumulator 21 als Energiespeicher vorgesehen.

Die Erfindung ist nicht beschränkt auf die beiden vorstehend beschriebenen bevorzugten Ausführungsbeispiele. Es sind vielmehr auch Abwandlungen hiervon denkbar, welche vom Schutzumfang der nachfolgenden Ansprüche mit umfasst sind. So ist es beispielsweise auch möglich, die durch die erfindungsgemäße Vorrichtung gebildete zweidimensionale Erfassungsfläche auch schräg im Raum, also nicht streng vertikal anzuordnen, sofern hierdurch eine örtliche Übereinstimmung mit ebenso platzierten und mit RFID-Transpondern ausgestatteten Wareneinheiten, Gebinden oder Ladungsträgern erreicht werden kann. Darüber hinaus sei darauf hingewiesen, dass anstelle eines RFID-Transponders auch ein anderes technisches Mittel zur drahtlosen Informationsübertragung im Nahfeldbereich genutzt werden kann.

### Bezugszeichenliste

- 1: Regal
- 2: Regalfach
- 3: Wareneinheit
- 4: RFID-Transponder
- 5: Lagerzone
- 6: Griffzone
- 7: RFID-Leseeinheit
- 8: Seilwinde
- 9: Zugseil
- 12: Elektronische Steuereinheit
- 13: Datenverarbeitungseinheit
- 14: Lagerverwaltungsrechner
- 15: Anzeigeeinheit
- 16: RFID-Sensor
- 17: Bildkamera
- 18: Abstandssensor
- 19: Tiefenbildsensor
- 20: Antenne
- 21: Akkumulator

## Patentansprüche

1. Vorrichtung zum Erfassen des Warenbestandes einer Verkaufs- und/oder Lagereinrichtung mittels einzelnen Wareneinheiten (3; 3') zugeordneten RFID-Transpondern (4), wobei sich eine RFID-Leseeinheit (7) zum Auslesen der in jedem RFID-Transponder (4) gespeicherten Information durch eine Robotereinrichtung entlang einer Erfassungsfläche gegenüberliegend zu jedem RFID-Transponder (4) positionieren lässt,
**dadurch gekennzeichnet, dass** die Robotereinrichtung als ein Seilroboter ausgebildet mehrere entlang der Erfassungsfläche angeordnete Zugseile (9a-9d) umfasst, die je zu einem Ende an der RFID-Leseeinheit (7) und zum anderen Ende an am Rand der Erfassungsfläche angeordneten und die Eckpunkte eines Rechtecks bildenden Seilwinden (8a-8d) angebracht sind, welche zur Positionierung der RFID-Leseeinheit (7) nach Maßgabe einer gemeinsamen elektronischen Steuereinheit (12) ansteuerbar sind, um jeden Punkt der zweidimensionalen Erfassungsfläche zu erreichen.

2. Vorrichtung nach Anspruch 1,
**dadurch gekennzeichnet, dass** die Erfassungsfläche vertikal ausgerichtet ist und zu einer Seite eines als Verkaufs- und/oder Lagereinrichtung ausgebildeten Regals (1) angeordnet ist.

3. Vorrichtung nach Anspruch 2,
**dadurch gekennzeichnet, dass** zumindest in jedem Eckbereich des Regals (1) eine Seilwinde (8a-8d) angebracht ist, so dass die RFID-Leseeinheit (7) über die je zugeordneten Zugseile (9a-9d) über eine rechteckige Erfassungsfläche bewegbar ist.

4. Vorrichtung nach Anspruch 1,
**dadurch gekennzeichnet dass** die RFID-Leseeinheit (7; 7') als ein Multisensormodul ausgebildet mit mindestens einer zusätzlichen Bildkamera (17) zur Ermittlung der Lagerplatzbelegung oder mit mindestens einem Abstandssensor (18) zur korrekten Positionierung relativ zum RFID-Transponder (4; 4') der Wareneinheit (3; 3') oder mit
LK:kw,mg
mindestens einem Tiefenbildsensor (19) zur dreidimensionalen Objekterkennung ausgestattet ist.

5. Vorrichtung nach Anspruch 1,
**dadurch gekennzeichnet, dass** die RFID-Leseeinheit (7; 7') mit einer drahtlosen Datenübertragungseinheit (20) ausgerüstet ist.

6. Verfahren zum Erfassen des Warenbestandes einer Verkaufs- und/oder Lagereinrichtung mit einer Vorrichtung gemäß eines der Ansprüche 1 bis 5,
**dadurch gekennzeichnet, dass** die RFID-Leseeinheit (7; 7') durch den Seilroboter nach Maßgabe der elektronischen Steuereinheit (12) entlang der Erfassungsfläche zu RFID-Transpondern (4; 4') von Wareneinheiten (3; 3') bewegt wird.

7. Verfahren nach Anspruch 6,
**dadurch gekennzeichnet, dass** die RFID-Leseeinheit (7; 7') in nicht festgelegter Reihenfolge bewegt wird.

8. Verfahren nach Anspruch 6,
**dadurch gekennzeichnet, dass** die RFID-Leseeinheit (7; 7') durch den Seilroboter zur Kalibrierung in eine bodennahe Wartungsposition am Rande der Erfassungsfläche gefahren wird.

9. Verfahren nach Anspruch 6,
**dadurch gekennzeichne4** dass alle redundant erfassten Daten von der Datenverarbeitungseinheit (13) analysiert werden, um Mess- und Erkennungsfehler zu kompensieren.

10. Verfahren nach Anspruch 6,
**dadurch gekennzeichnet, dass** statistisch erwartete Daten von einem übergeordneten Lagerverwaltungsrechner (14) zum Abgleich herangezogen werden.

11. Lagerverwaltungssystem für eine Verkaufs- und/oder Lagereinrichtung zur Aufnahme einzelner Wareneinheiten (3; 3'), denen jeweils RFID-Transponder (4; 4') zur Speicherung von Informationen zugeordnet sind, die eine Vorrichtung nach einem der Ansprüche 1 bis 5 nach Maßgabe einer Datenverarbeitungseinheit (13) ausliest und an einen übergeordneten Lagerverwaltungsrechner (14) zur Durchführung einer Lagerbestandsanalyse weiterleitet.

12. Lagerverwaltungssystem nach Anspruch 11,
**dadurch gekennzeichnet, dass** die Datenverarbeitungseinheit (13) die von der RFID-Leseeinheit (7; 7') erfassten warenbezogenen und mit einem Zeitstempel versehenen Daten in Zusammenhang mit den Positionsdaten der Steuereinheit der Vorrichtung bringt, um den so erzeugten Datensatz zu analysieren und dem Lagerverwaltungsrechner (14) zur Verfügung zu stellen.

13. Lagerverwaltungssystem nach Anspruch 11,
**dadurch gekennzeichnet, dass** dem Lagerverwaltungsrechner (14) eine Anzeigeeinheit (15) zur Visualisierung jedes Lagerplatzinhalts zugeordnet ist.

14. Verwendung eines Computerprogrammprodukts in einer Vorrichtung nach einem der Ansprüche 1 bis 5, welche nach einem Verfahren nach einem der Ansprüche6 bis 10 betreibbar ist, wobei die Routine zur Positionierung der RFID-Leseeinheit (7; 7') durch entsprechende in einer Software hinterlegte Steuerungsbefehle umgesetzt ist.

## Claims

1. A device for detecting the merchandise inventory of sales and / or storage facility by means of individual commodity units (3; 3') associated with RFID transponders (4), wherein an RFID reader unit (7) can be positioned for reading the stored information in each RFID transponder (4) by a robot device along a sensing area opposite to each RFID transponder (4), **characterized in that** the robot device, designed as a rope robot, comprises lifting cords (9a - 9d) disposed along the sensing area, which are oriented on one end to the RFID reader unit (7) and on the other end to winches (8a - 8d) arranged at the edge of the sensing area and forming the corners of a rectangle, which are controllable for positioning the RFID reader unit (7) in accordance with a common electronic control unit (12), to reach each point of the two-dimensional sensing surface.

2. A device according to claim 1, **characterized in that** the sensing area is oriented vertically and it is disposed to one side of a rack (1) formed as a sales and / or storage facility.

3. A device according to claim 2, **characterized in that** at least in each corner area of the rack (1) a winch (8a - 8d) is mounted, so that the RFID reader unit (7) can be moved via each assigned lifting cord (9a - 9d) over a rectangular sensing area.

4. A device according to claim 1, **characterized in that** the RFID reader unit (7; 7 ') is formed as a multi-sensor module having at least one additional camera (17) for determining the storage space availability or having at least one distance sensor (18) for correct positioning relative to the RFID transponder (4; 4') of the commodity unit (3; 3') or having at least one depth image sensor (19) for three-dimensional object detection.

5. A device according to claim 1, **characterized in that** the RFID reading unit (7; 7') is equipped with a wireless data transfer unit (20).

6. A method for detecting the merchandise inventory of sales and / or storage facility with a device according to one of claims 1 to 5, **characterized in that** the RFID reader unit (7; 7') ist moved by the cable robot in accordance with the electronic control unit (12) along the sensing area to RFID transponders (4; 4') of commodity units (3; 3')

7. The method of claim 6, **characterized in that** the RFID reader unit (7; 7') is moved in an unspecified order.

8. The method of claim 6, **characterized in that** the RFID reader unit (7; 7') is driven by the cable robot for calibration in a ground-level maintenance position at the edge of the sensing area.

9. The method according to claim 6, **characterized in that** all reduntantly detected data from the data processing unit (13) is analyzed in order to compensate measurement and recognition errors.

10. The method of claim 6, **characterized in that** statistically expected data from a superior warehouse management computer (14) is used for comparison.

11. Warehouse management system for a sales and / or storage facility for receiving individual commodity units (3; 3 '), each of which have RFID transponders (4; 4') for storing information, reading a device according to one of claims 1 to 5 according to a data processing unit (13) and passes it to a superior warehouse management computer (14) for performing an inventory analysis.

12. Warehouse Management System according to claim 11, **characterized in that** the data processing unit (13) associates the data provided with a time stamp and the commodity related data detected in the RFID reader unit (7; 7') with the position data of the control unit of the device, for analyzing the created data record and making the data available to the warehouse management computer (14).

13. Warehouse Management System according to claim 14, **characterized in that** a display unit (15) is assigned to the warehouse management computer (14) for visualizing each storage space content.

14. Use of a computer program product in a device according to one of claims 1 to 5, which is operable by a method according to any one of claims 6 to 10, wherein the routine for positioning the RFID reader unit (7; 7') is implemented by control commands deposited in a software.

## Revendications

1. Dispositif pour effectuer l'inventaire d'une installation de vente et/ou de stockage au moyen de transpondeurs RFID (4) associés à des unités-produit individuelles (3 ; 3'), dans lequel une unité de lecture RFID (7) destinée à lire les informations mémorisées dans chaque transpondeur RFID (4) peut être positionnée au moyen d'un système robot le long d'une surface de détection à l'opposé de chaque transpondeur RFID (4),
**caractérisé en ce que** le système robot réalisé à la manière d'un robot à câble inclut plusieurs câbles de traction (9a-9b) agencés le long de la surface de détection, qui sont montés chacun à une extrémité au niveau de l'unité de lecture RFID (7) et à l'autre extrémité à des treuils (8a-8d) agencés à la bordure de la surface de détection et formant les coins d'un rectangle, lesquels peuvent être pilotés pour positionner l'unité de lecture RFID (7) selon les instructions d'une unité de commande électronique commune (12) afin d'atteindre chaque point de la surface de détection bidimensionnelle.

2. Dispositif selon la revendication 1,
**caractérisé en ce que** la surface de détection est orientée verticalement et est agencée vers un côté d'un rayonnage (1) réalisé à titre d'installation de vente et/ou de stockage.

3. Dispositif selon la revendication 2,
**caractérisé en ce qu'**un treuil (8a-8d) est monté au moins dans chaque zone de coin du rayonnage (1), de sorte que l'unité de lecture RFID (7) est déplaçable au moyen des câbles de traction respectivement associés (9a-9d) au-dessus d'une surface de détection rectangulaire.

4. Dispositif selon la revendication 1,
**caractérisé en ce que** l'unité de lecture RFID (7 ; 7') est réalisée comme un module à capteurs multiples avec au moins une caméra d'imagerie additionnelle (17) pour la détermination de l'occupation des emplacements de stockage ou est équipée d'au moins un capteur de distance (18) pour le positionnement correct par rapport au transpondeur RFID (4 ; 4') de l'unité-produit (3 ; 3'), ou d'au moins un capteur d'image en profondeur (19) pour la reconnaissance d'objets tridimensionnels.

5. Dispositif selon la revendication 1,
**caractérisé en ce que** l'unité de lecture RFID (7 ; 7') est équipée d'une unité de transfert de données sans fil (20).

6. Procédé pour effectuer l'inventaire d'une installation de vente et/ou de stockage avec un dispositif selon l'une des revendications 1 à 5,
**caractérisé en ce que** l'unité de lecture RFID (7 ; 7') est déplacée par le robot à câble sur instructions de l'unité de commande électronique (12) le long de la surface de détection vers des transpondeurs RFID (4 ; 4') d'unités-produit (3 ; 3').

7. Procédé selon la revendication 6,
**caractérisé en ce que** l'unité de lecture RFID (7 ; 7') est déplacée suivant une succession non déterminée.

8. Procédé selon la revendication 6,
**caractérisé en ce que** l'unité de lecture RFID (7 ; 7') est amenée par le robot à câble dans une position de service proche du sol à la bordure de la surface de détection pour le calibrage.

9. Procédé selon la revendication 6,
**caractérisé en ce que** toutes les données détectées redondantes sont analysées par l'unité de traitement de données (13) afin de compenser des erreurs de mesure et des erreurs de reconnaissance.

10. Procédé selon la revendication 6,
**caractérisé en ce que** des données attendues sur le plan statistique sont utilisées à titre comparatif par un calculateur de gestion de stockage maître (14).

11. Système de gestion de stockage pour une installation de vente et/ou de stockage destinée à recevoir des unités-produit individuelles (3 ; 3') auxquelles sont respectivement associés des transpondeurs RFID (4 ; 4') pour la mémorisation d'informations, qu'un dispositif selon l'une des revendications 1 à 5 lit sur instructions d'une unité de traitement de données (13) et transmet à un calculateur de gestion de stockage maître (14) pour l'exécution d'une analyse de l'inventaire.

12. Système de gestion de stockage selon la revendication 11,
**caractérisé en ce que** l'unité de traitement de données (13) effectue une association des données relatives aux produits et détectées par l'unité de lecture RFID (7 ; 7') et dotées d'une marque temporelle, avec les données de position de l'unité de commande du dispositif, afin d'analyser les jeux de données ainsi engendrés et de les mettre à disposition du calculateur de gestion de stockage (14).

13. Système de gestion de stockage selon la revendication 11,
**caractérisé en ce qu'**une unité d'affichage (15) pour la visualisation du contenu de chaque emplacement de stockage est associée au calculateur de gestion de stockage (14).

14. Utilisation d'un produit formant programme d'ordinateur dans un dispositif selon l'une des revendications 1 à 5, qui est capable de fonctionner d'après un procédé selon l'une des revendications 6 à 10, dans lequel la routine pour le positionnement de l'unité de lecture RFID (7 ; 7') est mise en oeuvre par des ordres de commande correspondants inscrits dans un logiciel.
